# EUROPÄISCHE PATENTSCHRIFT

(11) **EP 0 326 966 B1**
(45) Veröffentlichungstag und Bekanntmachung des Hinweises auf die Patenterteilung: **07.01.1993**
(21) Anmeldenummer: 89101469.8
(22) Anmeldetag: 27.01.1989
(51) Int. Cl.: F16D 59/02, F16D 65/847, F16D 65/46, F16D 66/00

(54) **Elektromagnetische Federdruckbremse**
Electromagnetically actuated spring brake
Frein à ressort à actionnement électromagnétique

(30) Priorität: 28.01.1988 DE 3802534
(43) Veröffentlichungstag der Anmeldung: 09.08.1989
(73) Patentinhaber: Christian Mayr GmbH & Co. KG, 87665 Mauerstetten (DE)
(72) Erfinder: Mayr, Fritz , Dipl.-Ing., D-8951 Mauerstetten (DE); Vogt, Herbert, D-8951 Mauerstetten (DE)
(74) Vertreter: Ruschke, Hans Edvard, Dipl.-Ing.

(56) Entgegenhaltungen:
- EP-A- 0 162 481
- DE-A- 1 425 370
- DE-A- 1 600 097
- DE-A- 1 913 883
- DE-A- 2 022 202
- DE-A- 2 506 205
- DE-A- 2 625 990
- DE-A- 2 820 204
- DE-A- 2 832 523
- DE-A- 2 853 801
- DE-A- 3 338 289
- DE-C- 3 152 008
- GB-A- 703 143
- GB-A- 1 068 637
- ORGANI DI TRASMISSIONE, Jahrgang X, Nr. 5, Mai 1979, Seiten 93-99, Mailand; R.HINTERTHAN: "Frenia molla elettromagnetici"

## Beschreibung

Die vorliegende Erfindung betrifft eine elektromagnetische Federdruckbremse.

Elektromagnetische Sicherheitsbremsen werden in der Ausführung als Federdruckbremsen oder Ruhestrombremsen im stromlosen Zustand gebremst, d.h., bei Einschalten des Stromes wird die Bremsung gelöst und die Welle zur Rotation freigegeben. Im Stand der Technik werden verschiedene Anker verwendet, um unterschiedliche Effekte zu erzielen. So gibt es beispielsweise einen Schnellschaltanker (einteilige Ankerscheibe mit Eindrehung) für schnelles Schalten und zur Aufnahme von mittleren Reibarbeiten. Ferner werden bei bekannten Federdruckbremsen Ankerscheiben eingesetzt, die eine verhältnismäßig kleine Wärmekapazität haben und zur Überhitzung neigen.

Bei diesen herkömmlichen Ankerausführungen kommt es insbesondere bei hohen Reibarbeiten zu Problemen. Diese ergeben sich aus der zu starken Erwärmung, die sich zuerst am größten Durchmesser einstellt und zu einem Verziehen des Ankers führen kann, und dadurch zum Anfall von erhöhtem Abrieb, der sich zwischen den Anker und den Spulenträger setzt. Dies kann zum Ausfall der Bremse führen. Eine Verbiegung der Ankerscheibe und damit in Beziehung stehende Effekte wie z.B. falsches Nachstellen, Dauerschleifen des Rotors usw. sollten vermieden werden.

Um die sich aus der erhöhten Erwärmung und dem Verziehen des Ankers ergebenden Probleme in den Griff zu bekommen, ist bereits vorgeschlagen worden, den Anker besonders kräftig auszugestalten. Dies geschieht beispielsweise dadurch, daß die axiale Breite des Ankers vergrößert wird. Dies führt aber zu dem Nachteil, daß sich die Herstellung des Ankers verteuert, und die ganze Bremse, in der der Anker verwendet wird, breiter ausfällt, so daß letzlich die Fertigung und Lagerhalterung ebenfalls verteuert sind.

Aus der EP 0 162 481 ist ein Scheibenbremsmotor bekannt, bei dem der Anker zur Verringerung des Bremsbetätigungsgeräusches axial geteilt ist, nämlich durch den Aufbau der Ankerscheibe aus mehreren, insbesondere aus zwei in Aufeinanderlage miteinander verschweißten, nitrierten Stahlscheiben, von denen eine mit einem Radialschlitz versehen ist und einen größeren Durchmesser hat als die andere. Zugleich erstrecken sich beide Scheiben des Ankers über den Durchmesser des Reibbelagrotors hinaus.

Aus der DE-OS 26 25 990 ist eine elektromagnetisch lüftbare Federdruckbremse bekannt, bei der der Anker im Bereich ihrer der Bremsscheibe zugewandten Stirnfläche mit einer lose eingelegten Reibscheibe versehen ist, durch die das beim Bremsen häufig auftretende Quietschen beseitigt werden soll. Außerdem kann diese Reibscheibe nach starkem Verschleiß leicht ausgewechselt werden. Der Anker und die Reibscheibe erstrecken sich beide über den Durchmesser des Reibbelagrotors hinaus.

Der sich über den Durchmesser des Reibbelagrotors hinaus erstreckende Abschnitt des Ankers kann zur Aufnahme und Abgabe der am Anker entstehenden Reibungswärme dienen. Dadurch ist einerseits die Wärmekapazität des Ankers erhöht und andererseits eine vergrößerte Oberfläche geschaffen, die zu einer vermehrten Abgabe der Wärme an die Umgebung geeignet ist.

Es ist die der vorliegenden Erfindung zugrundeliegende Aufgabe, eine einfache und somit billig herzustellende Federdruckbremse anzugeben, die eine erhöhte Reibarbeit bei verbesserter Wärmeabfuhr am Anker ermöglicht. Diese Aufgabe wird durch eine elektromagnetische Federdruckbremse nach Anspruch 1 gelöst. Der Anker wird in bekannter Weise axial unterteilt, wobei jedoch die beiden Teile aus unterschiedlichen Werkstoffen bestehen. Diese Maßnahme hat den Vorteil, daß der mit dem Reibbelagrotor zusammenwirkende Teil des Ankers aus einem die Reibungswirkung fördernden Werkstoff gebildet sein kann, während der übrige Teil des Ankers aus einem Material gemacht sein kann, welches eine größere Wärmekapazität hat. Insbesondere kann der an dem Spulenträger anliegende Teil des Ankers so ausgebildet sein, daß die Spule auf den Anker eine maximale magnetische Anziehungskraft ausüben kann.

Durch die erfindungsgemäße Ausführungsform wird vorgesehen, den an dem Reibbelag des Rotors anliegenden Teil des Ankers als Gußscheibe auszubilden, und den anderen Teil als Stahlscheibe. Die Gußscheibe hat gegenüber Stahl verbesserte Reibeigenschaften, so daß an den Kontaktstellen günstigere Abnützungswerte und ein verbessertes Reibverhalten erzielt werden. Die an dem Spulenträger anliegende Stahlscheibe ist jedoch aus physikalischen Gründen sinnvoll, da Stahl im Gegensatz zu Gußeisen eine bessere Magnetisierbarkeit besitzt und somit eine einwandfreie Funktion gewährleisten kann. Somit läßt sich mit dieser Ausgestaltung eine Kombination aus günstigen magnetischen Eigenschaften und vorteilhaftem Reibverhalten des Ankers erzielen.

Ferner ist es vorteilhaft, die Gußscheibe und die Stahlscheibe lösbar miteinander zu verbinden. Dies erlaubt eine einfache Auswechslung eines Verschleißteiles, insbesondere einen Austausch der einem Verschleiß unterliegenden Gußscheibe.

In einer weiteren Ausgestaltung der Erfindung ist lediglich die Stahlscheibe über den Durchmesser des Reibbelagrotors hinaus erstreckt. Diese Ausgestaltung hat den Vorteil, daß die sich durch den Spulenträger und den Anker hindurch erstreckende Führungsbuchse für die Verschraubung der Federdruckbremse lediglich eine Ausnehmung in der Stahlscheibe verlangt, während der geringe Durchmesser der Gußscheibe eine Kollision mit der Führungsbuchse vermeidet und daher die Ausnehmung in der Gußscheibe entfallen kann, was die Herstellung derselben vereinfacht.

Eine Ausgestaltung der Gußscheibe in Grauguß oder Sphäroguß begünstigt die Eigenschaften des Ankers bei hohen Temperaturen. Die Grauguß-Ankerscheibe gleicht nämlich die Temperaturen gut aus und zeigt im Gegensatz zur Stahlscheibe keine Krümmung, so daß sich an der Trennfläche zwischen Grauguß-Ankerscheibe und Stahlscheibe ein Ausgleich der Verbiegung einstellt.

In einer weiteren Ausgestaltung der Erfindung ist der über den Durchmesser des Reibbelagrotors hinausgehende Abschnitt des Ankers mit einem ein- oder beidseitig vorspringenden Ansatz versehen. Dabei ist es vorteilhaft, den Ansatz radial außerhalb des Umfangs des Reibbelagrotors anzuordnen.

Durch eine solche Ausbildung des Ankers, bei dem eine zusätzliche Masse im Bereich des Außenumfanges des Ankers radial auswärts von den Reibbelägen angeordnet ist, wird eine wesentlich höhere Steifigkeit des Ankers erreicht, so daß ein Verziehen des Ankers auch bei einer verstärkten Erwärmung aufgrund von hoher Reibarbeit weitgehend vermieden werden kann. Da der Anker somit außerdem eine größere Masse hat, indem der Außendurchmesser des Ankers vergrößert und topfförmig über den Rotor gezogen wird, kann er kurzfristig mehr Wärme aufnehmen und anschließend über die vergrößerte Oberfläche ableiten. Da gleichzeitig der bisher ungenutzte Raum radial außerhalb der Reibbeläge genutzt wird, ohne den axialen Platzbedarf des Ankers zu vergrößern, können gleichzeitig die äußeren Abmessungen der Gesamtbremse unverändert bleiben, in welchem dieser Anker Verwendung findet. Schließlich wird durch die neue Formgebung des Ankers mit dem die Reibbeläge radial übergreifenden Abschnitt weitgehend vermieden, daß der Reibbelagabrieb in den Bereich zwischen dem Anker und dem Spulenträger auf der anderen Seite des Ankers gelangen kann. Stattdessen sammelt sich der Abrieb auf der Innenwandung des die Reibbeläge radial übergreifenden Abschnittes des Ankers an, wo der Abrieb nicht stört.

Wegen der höchsten Umfangsgeschwindigkeit am größten Durchmesser des Reibbelagrotors entsteht die höchste Temperatur an dem Rotor bzw. an dem daran anliegenden Ankerteil in diesem Bereich, wobei diese Ankerform ein großes Temperaturgefälle ermöglicht, um die Wärme günstig abzuleiten.

Der Abrieb des Reibbelages, welcher durch die Drehbewegung des Rotors nach außen geschleudert wird, setzt sich innen an dem axial vorspringenden Ansatz bzw. am Randflansch des Ankers fest. Bei den Ankerscheiben nach dem Stand der Technik konnte der Abrieb dagegen sehr leicht zwischen die Polfläche des Spulenträgers und die Ankerscheibe gelangen. Dadurch war ein einwandfreies Lüften der Bremse nicht mehr möglich und es entstand eine Überhitzung durch ständiges Schleifen des Rotors an der Ankerscheibe, was letztlich zum Ausfall der Bremse bzw. des Aggregates führte.

Der Ansatz kann in vorteilhafter Weise mit dem radial äußersten Abschnitt eines scheibenförmigen Teiles des Ankers verbunden sein. Dadurch entsteht ein geschlossener Winkelring in Topfform oder ein im Querschnitt T-förmiger Ring. Diese beiden Formen sind fertigungstechnisch einfach herzustellen.

Vorzugsweise ist der Ansatz aus einem anderen Werkstoff gebildet als ein scheibenförmiger Teil des Ankers. Mit dieser grundsätzlichen Maßnahme kann sichergestellt werden, daß der Ansatz in seiner Wärmekapazität gegenüber dem übrigen Teil des Ankers verbessert ist.

Es ist vorgesehen, die am Reibbelag des Rotors anliegende Oberfläche des Ankers mit einer porösen, harten und verschleißfesten Beschichtung mit glatter Oberfläche zu versehen. Diese Maßnahme ist vorteilhaft, da durch eine neuartige ca. 1 mm starke Beschichtung auf der Reibfläche des Ankers ebenfalls ein Verzug des Ankers vermieden wird. Die Beschichtung besteht aus einem verschleißfesten Material (z.B. Chromstahl) mit hoher Härte und geringem Schrumpfkoeffizienten, wobei das Material porös aufgebracht wird (etwa durch Metallspritzen). Durch anschließendes Schleifen dieses aufgebrachten Materials wird eine ausgezeichnete Oberfläche erzielt.

Es ist vorteilhaft, im Bereich des Ankers einen Temperaturfühler vorzusehen, der die Bremse bei einer bestimmten Temperatur auslöst. Dadurch ist wirksam jede Übererwärmung der Bremse vermieden. Der Temperaturfühler ist vorzugsweise ein Kaltleiter, der in dem drehfesten Anker bzw. der Maschinenwand untergebracht ist.

Ferner kann die Federdruckbremse so ausgestaltet sein, daß die Federdruckbremse im Bereich des Ankers nach außen durch einen Distanzring abgeschlossen ist, der zum Einstellen des Abstands zwischen dem Anker und dem Spulenträger dient, wobei der Distanzring so ausgestaltet ist, daß zwischen Anker und Distanzring ein Ringraum gebildet ist, der zur Aufnahme des Abriebs dienen kann. Es ist bekannt, daß im Laufe der Betriebsdauer der Bremse eine Vergrößerung des Luftspaltes zwischen Anker und Spulenträger auftritt. Ein Distanzring dient zur Nachstellung des Luftspalts und ist so ausgestaltet, daß der Abrieb der Bremse nach außen gelangen kann und sich nicht zwischen Ankerscheibe und Spulenträger absetzt, wodurch eine Beeinträchtigung der Funktion eintreten würde. Es ist bevorzugt, den Distanzring mit Belüftungsöffnungen zu versehen, die insbesondere auf seinem Umfang angeordnet sind. Durch den geöffneten Distanzring ist ein mit Luft gefüllter Ringraum geschaffen, in dem der sich drehende Reibbelagrotor eine Luftverwirbelung herbeiführt, die einen guten Wärmeaustausch nach sich zieht und die hohen Temperaturen am Reibbelagrotor bzw. an der Ankerscheibe zur Ableitung bringt.

Es ist ferner bevorzugt, den Anker auf seiner Stirnseite mit einer Eindrehung zu versehen, so daß er nur in seinem äußersten Randbereich auf dem Spulenkörper aufliegt. Diese Maßnahme hat den Vorteil, daß die nach dem Abschalten des Magnetfeldes verbleibende Remanenz des Ankers nur an dieser verbleibenden Auflagefläche wirken kann. Somit ist ein Anhaften des Ankers an dem Spulenkörper wirksam vermieden. Die elektromagnetische Federdruckbremse hat mit diesem Merkmal ein verbessertes Schaltzeitverhalten.

Zwei Ausführungsbeispiele der vorliegenden Erfindung werden unter Bezugnahme auf die beigefügte Zeichnung erläutert.
- Fig. 1: zeigt eine Schnittansicht einer ersten Ausführungsform der erfindungsgemäße Federdruckbremse;
- Fig. 2: zeigt eine Draufsicht auf den Anker der Ausführungsform der Fig. 1;
- Fig. 3: zeigt den erfindungsgemäßen Anker in einer Ansicht gemäß der Schnittlinie von Fig. 2;
- Fig. 4: zeigt eine Schnittansicht einer zweiten Ausführungsform der erfindungsgemäßen Federdruckbremse;
- Fig. 5: zeigt den Anker der zweiten Ausführungsform in einer axialen Draufsicht;
- Fig. 6: zeigt den Anker der zweiter Ausführungsform in T-form axial geschnitten; und
- Fig. 7: zeigt den Anker nach der zweiten Ausführungsform in Topfform axial geschnitten.

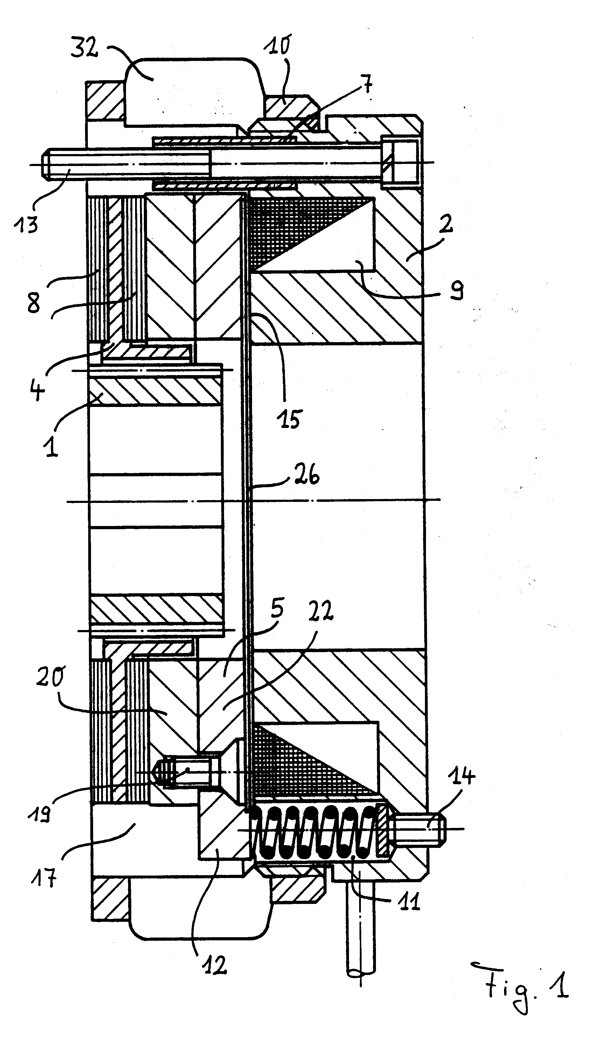

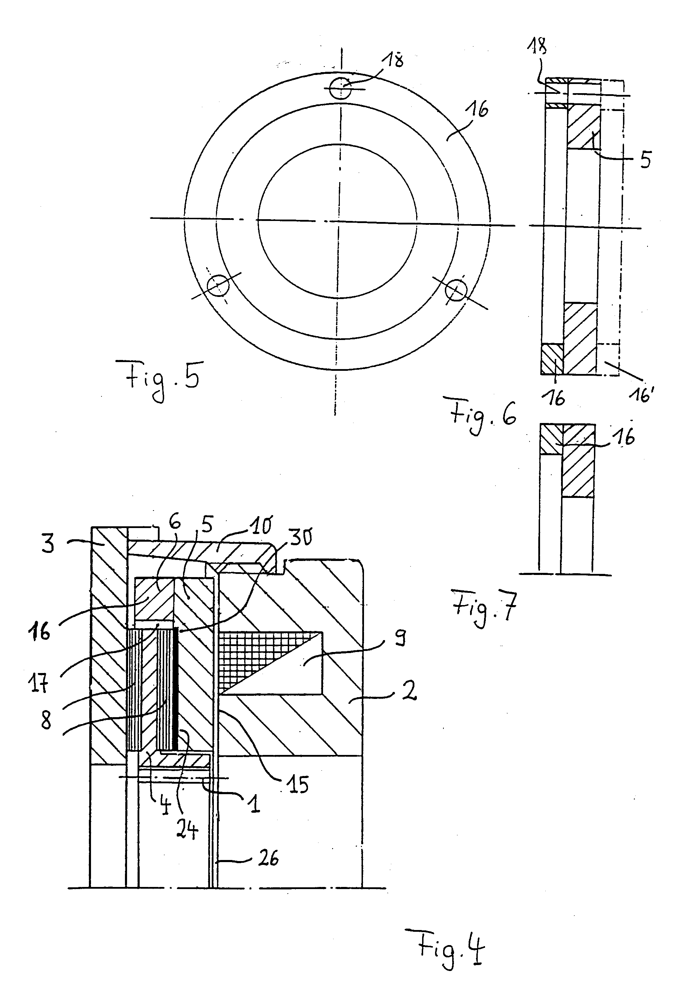

Die Figuren zeigen eine Federdruckbremse, d.h. eine ruhestrombetätigte elektromagnetische Sicherheitsbremse, die im stromlosen Zustand gebremst ist. Beim Einschalten des Stromes wird die Bremsung gelöst und die nicht dargestellte Welle zur Rotation freigegeben, die mit einer Zahnnabe 1 verbunden ist, welche einen radial sich erstreckenden flanschartigen Rotor 4 trägt, der beidseitig mit Reibbelägen 8 versehen ist. Der in Fig. 1 in einer radialen Mittelebene geteilte und in Fig. 4 ungeteilte Anker 5 wird von Schraubenfedern 11, deren Vorspannung durch Schrauben 14 einstellbar ist, entgegen der Kraft der Elektromagnetspule 9 im Spulenträger 2 axial in Richtung auf den Reibbelagrotor 4 beaufschlagt. Bei stromloser Spule 9 wird also der Reibbelagrotor zwischen dem in Umfangsrichtung unbeweglichen Anker 5, der sich in Umfangsrichtung an den Führungsbuchsen 7 der Schrauben 13 abstützt, und einer Flanschplatte 3 oder der Maschinenwand eingeklemmt und somit abgebremst. Damit wird die Welle über den Rotor 4 und die Zahnnabe 1 gebremst.

Beim Einschalten des Stromes zieht der Spulenträger 2 mit der Spule 9 an seiner Polfläche 15 den Anker 5 gegen den Druck der Federn 11 an und gibt den Rotor 4 mit den Reibbelägen 8 frei, so daß die nicht dargestellte Welle sich drehen kann.

Der Spulenträger 2 in Fig. 1 ist mit Hilfe von Zylinderschrauben 13 mit einer nicht dargestellten Maschinenwand verschraubt, wobei sich der Spulenträger 2 über einen Distanzring 10 an eben dieser Maschinenwand (oder der Flanschplatte 3 in Fig. 4) abstützt. Durch Abnützen der Reibbeläge 8 vergrößert sich der Luftspalt 26 zwischen dem Spulenträger 2 und der Ankerscheibe 5. Ein Verdrehen des Distanzringes 10 erzeugt aufgrund des Gewindes zwischen dem Distanzring 10 und dem Spulenträger 2 wieder den Anfangsluftspalt. Ein Bund am Spulenträger 2 begrenzt den Verstellweg des Distanzringes 10. Dadurch wird verhindert, daß sich die Reibbeläge des Rotors 8 infolge mehrfacher Nachstellung unzulässig weit abnützen. Der Distanzring 10 ist mit Belüftungsöffnungen 32 versehen, die zu einer vermehrten Luftzirkulation beitragen.

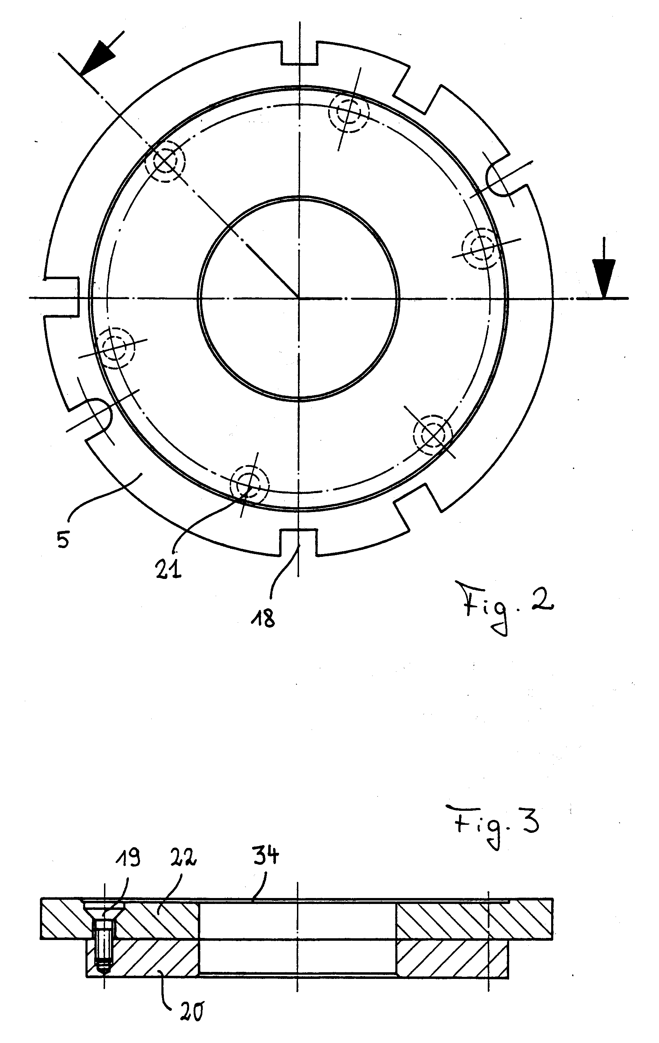

In Fig. 1 ist eine erste Ausführungsform der Erfindung dargestellt, bei der der Anker 5 axial durch eine radial verlaufende Trennebene unterteilt ist, und zwar in eine Gußscheibe 20 und eine Stahlscheibe 22. Die Gußscheibe 20 liegt an den Reibbelägen 8 des Rotors 4 an, während die Stahlscheibe 22 dem Spulenträger 2 gegenüber liegt. Die beiden Scheiben sind durch mehrere Senkschrauben 19 miteinander lösbar verschraubt. Der über den Reibbelagrotor 4 radial überstehende Teil 12 des Ankers 5 ist im Bereich der Stahlscheibe 22 vorgesehen. Dadurch braucht lediglich die Stahlscheibe 22 eine Bohrung bzw. einen Schlitz 18 für den Durchgang der Zylinderkopfschrauben 13 mit Führungsbuchse 7, wie in Fig. 2 zu erkennen ist. Die Fig. 2 zeigt ferner die Bohrungen 21 für den Einsatz der Senkschrauben 19. Der bei der Reibung zwischen Reibbelag 8 und Anker 5 entstehende Abrieb gelangt in einen Abriebsammelraum 17, wo er unschädlich ist. Die Fig. 3 zeigt den erfindungsgemaßen Anker gemäß der Schnittlinie von Fig. 2, wobei hier deutlich die stirnseitige Eindrehung 34 in der Stahlscheibe 22 zu erkennen ist. Die Eindrehung 34 erstreckt sich bis an den äußersten Rand der Stahlscheibe und vergrößert so den Luftspalt 26 über einen weiten Bereich. Der noch verbleibende, nicht eingedrehte Rand der Stahlscheibe ist zur Auflage auf der Polfläche 15 des Spulenträgers 2 bestimmt.

In der zweiten Ausführungsform der erfindungsgemäßen Federdruckbremse gemäß Fig. 4 - 7 ist der Anker 5 im Bereich des den Durchmesser des Reibbelagrotors 4 übersteigenden Durchmessers mit einem axial vorspringenden Ansatz 16 versehen, der mit dem radial äußersten Abschnitt des scheibenförmigen Teils der Ankerscheibe verbunden und somit radial außerhalb des Umfanges des Reibbelagrotors 4 angeordnet ist, so daß der Anker insgesamt eine im wesentlichen topfförmige Gestalt 6 hat, die die Reibbeläge radial nach außen hin abschirmt. Der Anker 5 ist ferner mit einer Beschichtung 24 versehen, die die Reibung zwischen Anker 5 und Reibbelägen 8 erhöht. Der Spitzentemperaturpunkt 30 liegt in dem Bereich der Reibbeläge 8, die den größten Radius zum Mittelpunkt der Zahnnabe 1 haben. Dort entsteht auch der größte Abrieb, der in einem Abriebsammelraum 17 Aufnahme findet.

Fig. 5 zeigt eine derartige topfförmige Ankerscheibe in einer Draufsicht und in einem Axialschnitt, wobei auf dem Umfang des flanschartigen Ansatzes 16 gleichmäßig verteilt Bohrungen 18 vorgesehen sind zur Aufnahme der Führungsbuchsen 7 und Befestigungsschrauben 13. Im Axialschnitt der Fig. 6 ist eine alternative Ausgestaltung der zweiten Ausführungsform in strichpunktierten Linien gezeigt, bei der der axial sich erstreckende flanschartige Ansatz 16, 16′ am äußersten Umfang der Ankerscheibe 5 auf beiden Seiten der radialen Mittelebene derselben angeordnet ist (T-Form). Insbesondere bei Kupplungs-Bremsaggregaten wäre eine derartige Ausgestaltung sinnvoll.

In Fig. 7 ist gezeigt, daß der sich in axialer Richtung erstreckende Ansatz 16 in Topfform am radial äußersten Umfang der Ankerscheibe 5 wahlweise aus einem anderen Werkstoff hergestellt und beispielsweise durch Aufschrumpfen etc. mit der Ankerscheibe verbunden ist. Hierdurch ergibt sich eine bessere Wärmeabfuhr, z.B. durch Verwendung von Aluminium, sowie eine bessere Herstellbarkeit indem die Ankerscheibe als Stanzteil ausgeführt und der Alu-Ring aufgeschrumpft wird.

### Bezugszeichenliste

- 1: Zahnnabe
- 2: Spulenträger
- 3: Maschinenwand/Flanschplatte
- 4: Rotorflansch
- 5: Anker
- 6: topfförmiger Rand von 5
- 7: Paßhülse
- 8: Reibbeläge
- 9: Spule
- 10: Distanzring
- 11: Schraubenfedern (n.d.)
- 12: überstehender Abschnitt
- 13: Zylinderkopfschrauben
- 14: Einstellschrauben
- 15: Polfläche
- 16: Ansatz/Ankerscheibe
- 17: Abriebsammelraum
- 18: Bohrung für Zylinderkopfschrauben
- 19: Senkschrauben
- 20: Gußscheibe
- 21: Bohrung für Senkschraube
- 22: Stahlscheibe
- 23:
- 24: Beschichtung
- 25:
- 26: Luftspalt
- 27:
- 28:
- 29:
- 30: Spitzentemperaturpunkt
- 31:
- 32: Belüftungsöffnungen
- 33:
- 34: Eindrehung

## Patentansprüche

1. Elektromagnetische Federdruckbremse, die einen ringförmigen Spulenträger (2) mit einer Spule (9) und einen Anker (5) sowie einen damit zusammenwirkenden Reibbelagrotor (4) aufweist, und bei der sich der Anker (5) radial zumindest abschnittsweise über den Durchmesser des Reibbelagrotors (4) hinaus erstreckt und der Anker axial unterteilt ist, dadurch gekennzeichnet, daß die beiden Teile aus unterschiedlichen Werkstoffen bestehen und der an dem Reibbelag (8) des Rotors (4) anliegende Teil des Ankers (5) eine Gußscheibe (20) und der andere Teil des Ankers (5) eine Stahlscheibe (22) ist.

2. Elektromagnetische Federdruckbremse nach Anspruch 1, dadurch gekennzeichnet, daß die Gußscheibe (20) und die Stahlscheibe (22) lösbar miteinander verbunden sind.

3. Elektromagnetische Federdruckbremse nach Anspruch 1 oder 2, dadurch gekennzeichnet, daß sich die Stahlscheibe (22) über den Durchmesser des Reibbelagrotors (4) hinaus erstreckt.

4. Elektromagnetische Federdruckbremse nach Anspruch 1, dadurch gekennzeichnet, daß die am Reibbelag (8) des Rotors (4) anliegende Oberfläche der Gußscheibe (20) mit einer porösen, harten und verschleißfesten Beschichtung mit glatter Oberfläche versehen ist.

5. Elektromagnetische Federdruchbremse nach Anspruch 1, dadurch gekennzeichnet, daß der über den Durchmesser des Reibbelagrotors (4) hinausgehende Abschnitt des Ankers (5) mit einem ein- oder beidseitig vorspringenden Ansatz (16, 16') versehen ist.

6. Elektromagnetische Federdruckbremse nach Anspruch 5, dadurch gekennzeichnet, daß der Ansatz (16, 16') radial außerhalb des Umfangs des Reibbelagrotors (4) angeordnet ist.

7. Elektromagnetische Federdruckbremse nach Anspruch 5 oder 6, dadurch gekennzeichnet, daß der Ansatz (16, 16') mit dem radial äußersten Abschnitt eines scheibenförmigen Teiles des Ankers (5) verbunden ist.

8. Elektromagnetische Federdruckbremse nach Anspruch 6, dadurch gekennzeichnet, daß der Ansatz (16, 16') aus einem anderen Werkstoff gebildet ist als ein scheibenförmiger Teil des Ankers (5):

9. Elektromagnetische Federdruckbremse nach Anspruch 1, dadurch gekennzeichnet, daß die Gußscheibe aus Grauguß oder aus Sphäroguß besteht.

10. Elektromagnetische Federdruckbremse nach Anspruch 1, gekennzeichnet durch einen im Bereich des Ankers (5) angebrachten Temperaturfühler, der die Bremse bei einer bestimmten Temperatur auslöst.

11. Elektromagnetische Federdruckbremse nach einem der vorhergehenden Ansprüche, dadurch gekennzeichnet, daß die Federdruckbremse im Bereich des Ankers nach außen durch einen Distanzring (10) abgeschlossen ist, der zum Einstellen des Abstandes zwischen dem Anker (5) und dem Spulenträger (2) dient.

12. Elektromagnetische Federdruckbremse nach Anspruch 11, dadurch gekennzeichnet, daß der Distanzring (10) so ausgestaltet ist, daß zwischen Anker (5) und Distanzring (10) ein Ringraum gebildet ist, der zur Aufnahme des Abriebes dienen kann.

## Claims

1. An electromagnetic spring pressure brake comprising an annular coil support (2) with a coil (9) and an armature (5) and a friction lining rotor (4) cooperating therewith, the armature (5) extending at least in sections beyond the diameter of the friction lining rotor (4) and being axially subdivided, characterised in that the two parts are made of different materials and the part of the armature (5) resting against the friction lining (8) of the rotor (4) is a cast disc (20) and the other part of the armature (5) is a steel disc (22).

2. An electromagnetic spring pressure brake according to claim 1, characterised in that the cast disc (20) and the steel disc (22) are releasably connected with one another.

3. An electromagnetic spring pressure brake according to claim 1 or 2, characterised in that the steel disc (22) extends beyond the diameter of the friction lining rotor (4).

4. An electromagnetic spring pressure brake according to claim 1, characterised in that the surface of the cast disc (20) resting against the friction lining (8) of the rotor (4) is provided with a porous, hard and wear-resistant coating having a smooth surface.

5. An electromagnetic spring pressure brake according to claim 1, characterised in that the section of the armature (5) extending beyond the diameter of the friction lining rotor (4) is provided with an extension (16, 16') projecting on one or both sides.

6. An electromagnetic spring pressure brake according to claim 5, characterised in that the extension (16, 16') is arranged radially outside the circumference of the friction lining rotor (4).

7. An electromagnetic spring pressure brake according to claim 5 or 6, characterised in that the extension (16, 16') is connected with the radially outermost section of a disc-shaped part of the armature (5).

8. An electromagnetic spring pressure brake according to claim 6, characterised in that the extension (16, 16') is made of a different material to a disc-shaped part of the armature (5).

9. An electromagnetic spring pressure brake according to claim 1, characterised in that the cast disc is made of cast iron or spheroidal graphite iron.

10. An electromagnetic spring pressure brake according to claim 1, characterised by a temperature sensor which is arranged in the region of the armature (5) and releases the brake at a given temperature.

11. An electromagnetic spring pressure brake according to one of the preceding claims, characterised in that the spring pressure brake is sealed relative to the outside in the region of the armature by a spacing ring (10), which is used for adjusting the distance between the armature (5) and the coil support (2).

12. An electromagnetic spring pressure brake according to claim 11, characterised in that the spacing ring (10) is designed in such a manner that an annular chamber is formed between the armature (5) and spacing ring (10) for receiving worn particles.

## Revendications

1. Frein électromagnétique à pression par ressorts, qui présente un porte-bobine annulaire (2) avec une bobine (9) et une armature (5) ainsi qu'avec un rotor (4) à garnitures de friction collaborant avec l'armature, et dans le cas duquel l'armature (5) s'étend radialement, au moins par tronçons, au-delà du diamètre du rotor (4) à garnitures de friction et l'armature est partagée dans le sens axial, frein caractérisé par le fait que les deux parties sont en matériaux différents et que la partie de l'armature (5) qui s'appuie contre la garniture de friction (8) du rotor (4) est un disque de fonte (20) et que l'autre partie de l'armature (5) est un disque d'acier (22).

2. Frein électromagnétique à pression par ressorts selon la revendication 1, caractérisé par le fait que le disque de fonte (20) et le disque d'acier (22) sont réunis l'un à l'autre de façon amovible.

3. Frein électromagnétique à pression par ressorts selon la revendication 1 ou 2, caractérisé par le fait que le disque d'acier (22) s'étend au-delà du diamètre du rotor (4) à garnitures de friction.

4. Frein électromagnétique à pression par ressorts selon la revendication 1, caractérisé par le fait que la surface du disque de fonte (20) qui s'appuie contre la garniture de friction (8) du rotor (4) comporte un revêtement poreux, dur et résistant à l'usure, à surface lisse.

5. Frein électromagnétique à pression par ressorts selon la revendication 1, caractérisé par le fait que le tronçon de l'armature (5) qui déborde au-delà du diamètre du rotor (4) à garnitures de friction comporte un appendice (16, 16') qui vient en saillie d'un côté ou des deux côtés.

6. Frein électromagnétique à pression par ressorts selon la revendication 5, caractérisé par le fait que l'appendice (16, 16') est disposé, dans le sens radial, à l'extérieur de la périphérie du rotor (4) à garnitures de friction.

7. Frein électromagnétique à pression par ressorts selon la revendications 5 ou 6, caractérisé par le fait que l'appendice (16, 16') est réuni au tronçon radialement le plus extérieur d'une partie en forme de disque de l'armature (5).

8. Frein électromagnétique à pression par ressorts selon la revendication 6, caractérisé par le fait que l'appendice (16, 16') est en un autre matériau qu'une partie en forme de disque de l'armature (5).

9. Frein électromagnétique à pression par ressorts selon la revendication 1, caractérisé par le fait que le disque de fonte est en fonte grise ou en fonte sphéroïdale.

10. Frein électromagnétique à pression par ressorts selon la revendication 1, caractérisé par un capteur de température qui est disposé dans la zone de l'armature (5) et desserre le frein en présence d'une température déterminée.

11. Frein électromagnétique à pression par ressorts selon l'une des revendications précédentes, caractérisé par le fait que, dans la zone de l'armature, le frein à pression par ressorts est bordé vers l'extérieur par une bague d'écartement (10) qui sert à régler la distance entre l'armature (5) et le porte-bobine (2).

12. Frein électromagnétique à pression par ressorts selon la revendication 11, caractérisé par le fait que la bague d'écartement (10) a une forme telle qu'entre l'armature (5) et la bague d'écartement (10) se forme un espace annulaire qui peut servir à recevoir la poussière d'usure.
